# EUROPÄISCHE PATENTANMELDUNG

(11) **EP 1 923 569 A1**
(43) Veröffentlichungstag der Anmeldung: **21.05.2008**
(21) Anmeldenummer: 06090210.3
(22) Anmeldetag: 14.11.2006
(51) Int. Cl.: F03G 7/04, F28D 15/02, F24J 3/08

(54) **Erdwärmesonde**

(71) Anmelder: Gundermann, Alf, 04129 Leipzig (DE)
(72) Erfinder: Gundermann, Alf, 04129 Leipzig (DE)
(74) Vertreter: Theobald, Andreas

(57) **Zusammenfassung**

Es wird eine von der Erdoberfläche aus in ein Bohrloch zu versenkende Erdwärmesonde (1, 100) mit einem im Bereich der Erdoberfläche anzuordnenden oberen Ende und einem in das Bohrloch zu versenkenden unteren Ende zur Verfügung gestellt. Die Erdwärmesonde ist ausgestattet
- mit einer Kernsonde (5), welche umfasst:
- einen Verdampfungsraum (23), welcher bei in ein Bohrloch versenkter Erdwärmesonde (1, 100) im Bereich unterhalb der Vegetationszone vorhanden ist,
- wenigstens eine Fluidleitung (25), welche vom oberen Ende aus zugänglich ist, sich bis zum Verdampfungsraum (23) erstreckt und über wenigstens eine Austrittsöffnung (31) in den Verdampfungsraum (23) mündet, und
- wenigstens einen Steigraum (27), welcher vom Verdampfungsraum (23) ausgehend zum oberen Ende führt und einem über die wenigstens eine Fluidleitung (25) in den Verdampfungsraum (23) eingebrachten und dort verdampften Fluid den Aufstieg zum oberen Ende ermöglicht,

- und mit einer Mantelsonde (3, 300), welche die Kernsonde (5) in ihrem in das Bohrloch zu versenkenden Abschnitt vollständig umgibt.

## Beschreibung

Die vorliegende Erfindung betrifft eine von der Erdoberfläche aus in ein Bohrloch zu versenkende Erdwärmesonde.

Der zunehmende Energiebedarf in den Industriestaaten und Schwellenländern macht es erforderlich, bei der Energiegewinnung sowie bei der Gewinnung von Wärme neue Wege zu beschreiten und insbesondere den Anteil an umweltverträglicher Energie- und Wärmegewinnung zu erhöhen. Dabei sind beispielsweise die Gewinnung von Wärme und Energie aus Sonnenlicht oder Windkraft zu nennen. Neben der Gewinnung von Energie und Wärme aus Sonnenlicht oder Windkraft wird auch die Gewinnung von Energie und Wärme aus Erdwärme zunehmend in Betracht gezogen.

Die Energie- und Wärmegewinnung aus geothermischen Vorkommen ist weltweit grundsätzlich an jedem Punkt der Erde möglich.

Eine Geothermieanlage zum Heizen und Klimatisieren ist beispielsweise im Dresdener Transferbrief 1.05, 13. Jahrgang, Seite 18 beschrieben. Die Anlage arbeitet im sogenannten Direktverdampfer-Verfahren, in dem ein Kältemittel, etwa Ammoniak, Propan, Butan oder Kohlendioxid bei gesteuertem Innendruck als flüssiges Kältemittel in ein Stahlrohr, welches in ein Bohrloch eingeführt ist, injiziert wird. Aufgrund der Erdwärme, die auf den Rohrmantel einwirkt, verdampft das Kältemittel und entzieht dabei dem umgebenen Erdreich thermische Energie. Das verdampfte Kältemittel steigt im Zentrum des Rohres auf und wird über der Erde einer Wärmepumpe zugeführt, welche ihm die Wärme durch Kompression entzieht. Durch den Entzug der Wärme kondensiert das Kältemittel wieder. Es wird dann im kondensierten Zustand wieder in das Stahlrohr einlaufen gelassen, so dass ein Kreislauf entsteht.

Typische Erdwärmesonden sind bspw. in EP 1194 723 B1 und in DE 203 20 409 U1 beschrieben. Diese Erdwärmesonden umfassen im Wesentlichen ein Innenrohr, durch welches verdampftes Kältemittel aufsteigen kann, und einen um das Innenrohr herum angeordneten Kanal, durch den flüssiges Kältemittel dem unteren Bereich der Erdwärmesonde zugeführt werden kann.

Häufig wird als Kältemittel Ammoniak (NH₃) verwendet, welches die Umwelt schädigt, wenn es aus der Erdwärmesonde in das umgebende Erdreich eindringt. Ein Eindringen von Ammoniak in das umgebende Erdreich ist insbesondere dann schädlich, wenn die Gefahr besteht, dass das Ammoniak in wasserführende Schichten gelangt bzw. in die Atmosphäre ausgast.

Aufgabe der vorliegenden Erfindung ist es deshalb, eine Erdwärmesonde zur Verfügung zu stellen, bei der die Gefahr einer Kontamination des umgebenden Erdreiches zumindest unterdrückt ist und vorzugsweise sogar ganz ausgeschlossen werden kann.

Diese Aufgabe wird durch eine Erdwärmesonde nach Anspruch 1 gelöst. Die abhängigen Ansprüche enthalten vorteilhafte Ausgestaltungen der Erfindung.

Eine erfindungsgemäße Erdwärmesonde, die von der Erdoberfläche aus in ein Bohrloch zu versenken ist, besitzt ein im Bereich der Erdoberfläche anzuordnendes oberes Ende und ein in das Bohrloch zu versenkendes unteres Ende. Sie umfasst eine Kernsonde mit einem Verdampfungsraum, welcher bei in ein Bohrloch versenkter Erdwärmesonde im Bereich unterhalb der Vegertationszone vorhanden ist, bspw. im Bereich des unteren Endes der Erdwärmesonde, und der sich insbesondere bis in den mittleren Bereich der Erdwärmesonde oder sogar in Richtung auf das obere Ende darüber hinaus erstrecken kann. Die Kernsonde umfasst weiterhin eine Fluidleitung, die vom oberen Ende aus zugänglich ist, sich bis zum Verdampfungsraum erstreckt und über wenigstens eine Austrittsöffnungen in den Verdampfungsraum mündet. Daneben umfasst die Kernsonde einen Steigraum, welcher vom Verdampfungsraum ausgehend zum oberen Ende führt und einen über die wenigstens eine Fluidleitung in den Verdampfungsraum eingebrachten und dort verdampften Fluid den Aufstieg zum oberen Ende ermöglicht. Außer der Kernsonde umfasst die erfindungsgemäße Erdwärmesonde noch eine Mantelsonde, welche den in das Bohrloch zu versenkenden Abschnitt der Kernsonde vollständig umgibt.

Die Mantelsonde der erfindungsgemäßen Erdwärmesonde kann als Auffangbecken für aus der Kernsonde austretendes Kältefluid, beispielsweise Ammoniak (NH₃), dienen. Ein Leck im Kältefluidkreislauf führt daher nicht wie in den eingangs genannten Erdwärmesonden nach Stand der Technik zu einer Kontamination des umgebenden Erdreiches sondern lediglich zu einem Auslaufen des Kältemittels in die Mantelsonde, von wo es anschließend entfernt werden kann.

Die Mantelsonde weist insbesondere eine hohe zylindrische Form mit einer Zylinderwand und einer Stirnwand auf, wobei die Anmessungen des Hohlzylinders so gewählt sind, dass sich die Kernsonde in die Mantelsonde einbringen lässt, ohne die Zylinderwand oder die Stirnwand zu berühren. Auf diese Weise ist sichergestellt, dass überall ein Auffangvolumen für austretendes Kältefluid vorhanden ist.

In einer besonders vorteilhaften Ausgestaltung der erfindungsgemäßen Erdwärmesonde ist der Zwischenraum zwischen der Zylinderwand und der Kernsonde mit Fluid gefüllt. Dies bietet einerseits den Vorteil, dass das Fluid als Wärmefluid Verwendung finden kann, mit welchem Wärme in das umgebende Erdreich eingebracht werden kann. Dies ist beispielsweise dann sinnvoll, wenn bei der Verarbeitung des in der Kernsonde aufsteigenden Kältefluids über der Erdoberfläche Abwärme auftritt, etwa in Wärmetauschern. Diese Abwärme kann über das zwischen Mantelsonde und Kernsonde befindliche Fluid in das Erdreich rückgeführt werden, wodurch beispielsweise das Ausbilden eines Frostmantels um die Erdwärmesonde unterdrückt werden kann.

Wenn das Fluid derart zum Einbringen von Wärme in das Erdreich Verwendung finden soll, umfasst die Erdwärmesonde eine Vorrichtung zum Erzeugen und Aufrechterhalten eines Fluidkreislaufes für das Fluid durch den Zwischenraum zwischen der Kernsonde und der Mantelsonde. Der Fluidkreislauf kann dabei wenigstens eine sich von einem von der Erdoberfläche aus zugänglichen Abschnitt der Mantelsonde aus in den Zwischenraum erstreckende Saugleitung umfassen. Die Saugleitung kann neben ihrer Funktion im Fluidkreislauf auch noch die Funktion ausführen, das Fluid im Falle einer Kontamination vollständig aus dem Zwischenraum abzusaugen. Die Saugleistung erstreckt sich dann vorzugsweise bis zum Boden der Mantelsonde.

Es besteht auch die Möglichkeit, mehr als eine Saugleitung zu verwenden. Die kann beispielsweise so genutzt werden, dass verschiedene Saugleitungen bis in verschiedene axiale Abschnitte des Zwischenraums vordringen, d.h. sich bei in ein Bohrloch versenkter Erdwärmesonde in unterschiedliche Tiefen erstrecken. Wenn die unterschiedlichen Saugleitungen getrennt voneinander betrieben werden können, besteht die Möglichkeit, unterschiedliche Wärmemengen in unterschiedliche Tiefen der Bohrung einzubringen. Wenn beispielsweise nur die Saugleitung betrieben wird, die bis zum Boden der Mantelsonde reicht, so wird Wärme des Wärmefluids durch nachströmendes, abgesaugtes Wärmefluid ersetzendes Wärmefluid bis in den untersten Bereich der Erdwärmesonde transportiert. Auf diese Weise kann das gesamte, die Erdwärmesonde umgebende Erdreich eisfrei gehalten werden. Soll andererseits in einer bestimmten Tiefe, beispielsweise im untersten Bereich der Erdwärmesonde, ein Frostmantel entstehen, so wird das Fluid bereits weiter oben, also mit der kürzeren Saugleitung, aus dem Zwischenraum abgesaugt. Der Wärmeeintrag konzentriert sich dann im Wesentlichen auf den Abschnitt zwischen der Erdoberfläche und der Öffnung dieser Saugleitung.

Das Fluid, welches im Zwischenraum zirkuliert, kann zudem zum Aufbau eines Kühlkreislaufes Verwendung finden. Insbesondere wenn mehrere Saugleitungen vorhanden sind, die bis in unterschiedliche Tiefen reichen und die sich unabhängig voneinander betreiben lassen, kann die Kühlleistung eines derartigen Kühlkreislaufes variiert werden. So kann beispielsweise bei einem geringen Kühlleistungsbedarf lediglich eine Fluidleitung betrieben werden, die nicht bis in den untersten Bereich der Mantelsonde reicht. Mit anderen Worten, der Wärmeeintrag in das Erdreich erfolgt nicht im unteren Bereich der Erdwärmesonde. Im unteren Bereich kann sich daher ein Frostmantel ausbilden. Falls dann ein höherer Kühlleistungsbedarf vorliegt, kann von der bisher verwendeten Saugleitung auf die bis in den unteren Bereich der Mantelsonde reichende Saugleitung umgeschaltet werden, sodass durch den Wärmeeintrag der Frostmantel verringert wird. Durch das Mehr an in das Erdreich eingebrachte Wärme wird die Kühlleistung des Kühlkreislaufes erhöht.

Außerdem kann das zwischen der Kernsonde und der Mantelsonde befindliche Fluid dazu dienen, aus der Kernsonde austretendes Kältefluid aufzunehmen. Das aus der Kernsonde austretende Kältefluid kann dabei zu einer Druckerhöhung im Fluid der Mantelsonde führen. Andererseits bildet das Kältefluid eine Verunreinigung des Fluids zwischen Kernsonde und Mantelsonde. Durch eine Detektion einer Verunreinigung oder einer Druckerhöhung ist daher auf das Vorhandensein eines Lecks in der Kernsonde zu schließen.

Wenn der Druck des Fluids im Zwischenraum höher ist als der Druck des Kältefluids in der Kernsonde, führt ein Leck in der Kernsonde nicht zum Austrittfluid von Kältefluid, sondern zum Eindringen von Fluid aus dem Zwischenraum in die Kernsonde. Da der Zwischenraum zwischen der Mantelsonde und der Kernsonde in dieser Ausgestaltung nicht kontaminiert wird, kann eine Kontamination des umgebenden Erdreiches besonders zuverlässig vermieden werden.

Als Fluid für den Zwischenraum zwischen der Kernsonde und der Mantelsonde kann beispielsweise ein unter Umweltgesichtspunkten unbedenkliches Wasser/Alkoholgemisch, bspw. ein Wasser/Äthanolgemisch, ein Wasser/Glykolgemisch oder eine Kombination aus beidem dienen. Der Alkohol bzw. das Glykol verhindert dabei ein Gefrieren des Wassers bei niedrigen Verdampfungstemperaturen.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
- Fig. 1: zeigt ein erstes Ausführungsbeispiel für eine erfindungsgemäße Erdwärmesonde.
- Fig. 2: zeigt ein zweites Ausführungsbeispiel für eine erfindungsgemäße Erdwärmesonde.

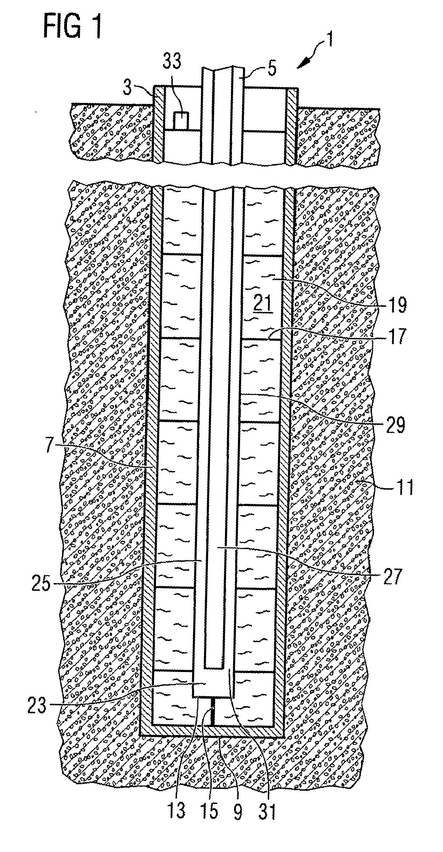

Ein erstes Ausführungsbeispiel für die erfindungsgemäße Erdwärmesonde wird nachfolgend mit Bezug auf Fig. 1 beschrieben. Die Erdwärmesonde 1 umfasst eine Mantelsonde 3 in Form eines Rohres 7 sowie eine in der Mantelsonde 3 zentriert angeordnete Kernsonde 5. Das Rohr 7 der Mantelsonde ist an einem Ende durch eine Platte 9 dicht verschlossen. Die Platte 9 befindet sich an dem Ende des Rohres 7, das in die Erde versenkt wird. Das mit der Platte 9 verschlossene Ende des Rohres 7 wird im folgenden als unteres Ende der Mantelsonde 3 bezeichnet. Als oberes Ende der Mantelsonde 3 wird entsprechend das gegenüberliegende Ende bezeichnet.

Das Rohr 7 und die Platte 9 können insbesondere aus Metall bestehen, wobei die Platte 9 dann an das Ende des Rohres 7 angeschweißt sein kann. Grundsätzlich ist es aber auch möglich, das Rohr 7 und die Platte 9 einstückig auszubilden, beispielsweise dann, wenn die Mantelsonde 3 aus einem Kunststoff besteht.

Üblicherweise ist das Rohr 7 aus Rohrabschnitten aufgebaut, die nacheinander in eine Bohrung im Erdreich 11 versenkt werden. Beim Versenken in ein Bohrloch werden die Rohrsegmente beispielsweise durch Verschweißen im Falle von metallischen Rohrsegmenten dicht miteinander verbunden, so dass die Mantelsonde 3 einen zum umgebenden Erdreich hin dichten Hohlraum bildet.

Die in der Mantelsonde 3 zentrisch angeordnete Kernsonde 5 erstreckt sich bis dicht an das untere Ende der Mantelsonde 3. Das im unteren Ende der Mantelsonde 3 angeordnete Ende der Kernsonde 5 wird im folgenden unteres Ende der Kernsonde 5 bezeichnet. Entsprechend wird das gegenüberliegende Ende der Kernsonde 5 als oberes Ende der Kernsonde 5 bezeichnet. Das untere Ende der Kernsonde 5 ist von der Platte 9 der Mantelsonde 3 beabstandet. Zur Abstandwahrung ist zwischen der Platte 9 und dem unteren Ende 13 der Mantelsonde 5 wenigstens ein Abstandshalter 15 angeordnet. Der Abstand zwischen dem unteren Ende 13 und der Platte 9 braucht dabei lediglich so groß zu sein, dass ein Fluid in den Zwischenraum zwischen dem unteren Ende 13 und der Platte 9 eingebracht werden kann.

In ihrer zur Mantelsonde 3 zentrischen Lage wird die Kernsonde 5 durch eine Anzahl von Stützstreben 17 gehalten, über die gesamte Länge der Erdwärmesonde 1 sowie über den Umfang der Mantelsonde 5 verteilt sind. Der wenigstens eine Abstandshalter 15 und die Stützstreben 17 stellen sicher, dass zwischen der Mantelsonde 3 und der Kernsonde 5 ein zum umgebenden Erdreich hin dichter Zwischenraum 19 verbleibt, welcher den in ein Bohrloch zu versenkenden Teil der Kernsonde 5 vollständig umschließt.

Wenn die Erdwärmesonde 1 in ein Bohrloch im Erdreich 11 versenkt ist, befindet sich eine Flüssigkeit 21 im Zwischenraum 19. Die Flüssigkeit ist so gewählt, dass sie bei einem etwaigen Austritt aus der Mantelsonde 3 ins Erdreich 11 keine Gefahr darstellt. Insbesondere ist die Flüssigkeit nicht toxisch. Außerdem ist die Flüssigkeit so gewählt, dass sie auch bei Temperaturen von bis zu -20°C und vorzugsweise bis zu -30°C nicht gefriert. Eine Flüssigkeit, welche die genannten Anforderungen erfüllt und die im vorliegenden Ausführungsbeispiel zur Anwendung kommt ist beispielsweise ein Gemisch aus Wasser und Äthanol. Statt Äthanol können aber auch andere, das Gefrieren des Wassers verhindernde Zusätze Verwendung finden, bspw. andere Alkohole oder Glykol.

Die Kernsonde 5 stellt die eigentliche Arbeitssonde der Erdwärmesonde dar. Sie umfasst einen Verdampfungsraum 23, der im Bereich des verschlossenen unteren Endes 13 der Kernsonde 5 angeordnet ist. Weiterhin umfasst sie einen Steigraum 27, welcher ein zum Verdampfungsraum 23 hin offenes Ende aufweist und einem gasförmigen Fluid den Aufstieg vom Verdampfungsraum 23 zum oberen Ende der Kernsonde 5 ermöglicht. Der Steigraum 27 ist als offenes Steigrohr ausgebildet, das zentrisch in einem Außenrohr 29 der Kernsonde 5 angeordnet ist. Durch die zentrische Anordnung des Steigrohres 27 verbleibt zwischen dem Außenrohr 29 und dem Steigrohr 27 ein Ringraum 25, der als Fluidleitung dient, die vom oberen Ende der Kernsonde 5 aus zugänglich ist und sich bis zum Verdampfungsraum 23 erstreckt. Über eine Austrittsöffnung 31 mündet der Ringraum 25 in den Verdampfungsraum 23.

In der Kernsonde zirkuliert Ammoniak (NH₃) als ein Kältefluid. Es wird über den Ringraum 25 im flüssigen Zustand in den Verdampfungsraum 23 eingebracht, wo es verdampft und durch das Steigrohr 27 zum oberen Ende der Kernsonde 5 aufsteigt. Durch die Verdampfung entzieht es dem umgebenden Wasser/Äthanolgemisch Wärme, die später in einem Wärmetauscher beispielsweise zum Heizen eines Gebäudes Verwendung finden kann. Die dem Wasser/Äthanolgemisch in der Umgebung des Verdampfungsraums 23 entzogene Wärme wird ihm vom umgebenden Erdreich wieder zugeführt. Effektiv entzieht daher das verdampfende Kältefluid die Wärme dem umgebenden Erdreich 11, das ein Wärmereservoir darstellt. Das Wasser/Äthanolgemisch stellt im Rahmen dieses Wärmeentzugs aus dem Erdreich lediglich ein Übertragungsmedium dar. Es sei an dieser Stelle angemerkt, dass im Erdreich bereits bei einer Tiefe von etwa 100 m gangjährig eine gleichmäßige Temperatur von etwa 10°C herrscht.

Das Wasser/Äthanolgemisch dient zwar als Wärmeübertragungsmedium vom Erdreich 11 zur Kernsonde 5, seine Hauptaufgabe besteht jedoch darin, zusammen mit der gegenüber dem Erdreich 11 dichten Mantelsonde 3 einen Schutz der Anlage gegen ein Austreten von Ammoniak in das Erdreich 11 zu sichern. Falls ein Leck in der Kernsonde 5 auftritt, welches zum Austreten von Ammoniak führt, so tritt dieses nicht in das Erdreich aus, sondern lediglich in das Wasser/Äthanolgemisch. Wenn der Druck des Ammoniaks in der Kernsonde 5 höher ist als der im Wasser/Äthanolgemisch herrschende Druck, so führt das aus der Kernsonde 5 austretende Ammoniak zu einer Druckerhöhung im Wasser/Äthanolgemisch, die beispielsweise mittels wenigstens eines Drucksensors 33 gemessen werden kann. Die Überwachung des im Wasser/Äthanolgemisches herrschenden Drucks kann daher zur Leckdetektion herangezogen werden. Falls mehrere Drucksensoren im Zwischenraum 19 zwischen der Kernsonde und der Mantelsonde 3 verteilt sind, kann aus der zeitlichen Folge, mit denen ein Druckanstieg gemessen wird, auch auf die Lage des Lecks rückgeschlossen werden.

Eine zweite Möglichkeit, ein Leck zu detektieren besteht darin, die Zusammensetzung des Wasser/Äthanolgemisches kontinuierlich zu überwachen. Sobald Ammoniak im Wasser/ detektiert wird, bedeutet dies, dass ein Leck in der Kernsonde 5 aufgetreten ist.

Es bietet sich an, den Betriebsvorgang der Kernsonde 5 bei Detektion eines Leckes automatisch zu stoppen. Im beschriebenen Ausführungsbeispiel erfolgt das Stoppen selbsttätig dadurch, dass in der Kernsonde zirkulierendes Ammoniak vom Wasser/Äthanolgemisch in der Mantelsonde vollständig absorbiert wird, so dass in der Kernsonde keine Verdampfung mehr stattfinden kann. Ein Ausbleiben der Verdampfung kann daher ebenfass für die Detektion eines Leckes in der Kernsonde dienen. Die Kernsonde 5 und die Mantelsonde 3 können dann unmittelbar nach Eintreten der Störung evakuiert und die kontaminierten Flüssigkeiten entsorgt werden. Nach Behebung der Schadensursache wird mittels eines Initialisierungsprogramms die Dichtigkeit sowohl der Kernsonde 5 als auch der Mantelsonde 3 geprüft. Falls keine undichte Stelle gefunden wird, kann der Betrieb der Erdwärmesonde 1 wieder aufgenommen werden.

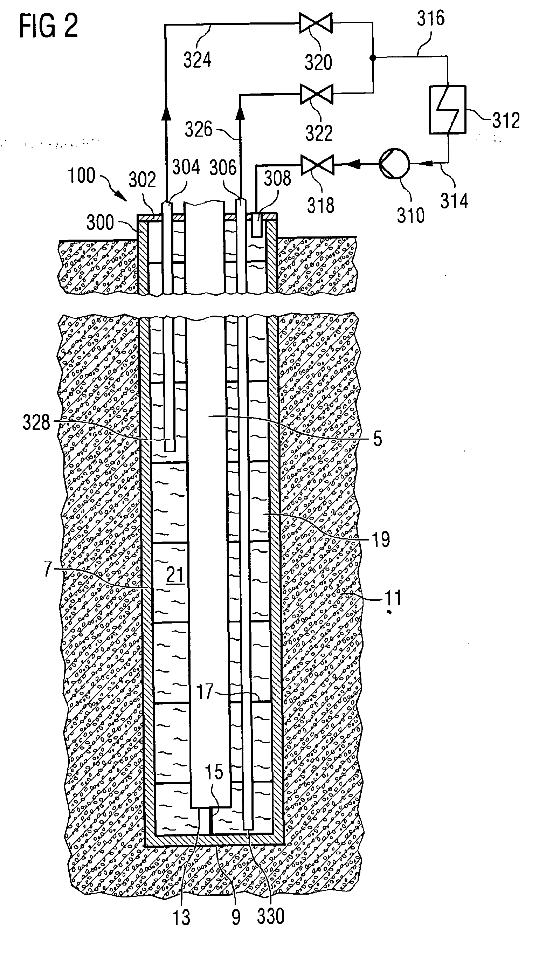

Ein zweites Ausführungsbeispiel für die erfindungsgemäße Erdwärmesonde wird nachfolgend mit Bezug auf Fig. 2 beschrieben. Elemente, die den in Fig. 1 dargestellten Elementen entsprechen sind in Fig. 2 mit denselben Bezugsziffern wir in Fig. 1 bezeichnet. Sie werden nicht noch einmal erläutert.

Die in Fig. 2 dargestellte Erdwärmesonde 100 unterscheidet sich von der in Fig.1 dargestellten Erdwärmesonde 1 lediglich durch den Aufbau der Mantelsonde 300. Die Kernsonde entspricht vollständig der in Fig. 1 dargestellten Kernsonde 5.

Die Mantelsonde 300 gemäß dem zweiten Ausführungsbeispiel weist am oberen Ende eine Abschlussplatte 302 auf, die gasdicht mit dem Rohr 7 verschweißt ist. In der Abschlussplatte 302 sind Durchführungen vorhanden, durch die einerseits die Kernsonde 5 und andererseits Saugleitungen 304, 306 und wenigstens eine Zufuhrleitung 308 hindurchgeführt sind. Die Durchführungen sind gas- und druckdicht abgedichtet. Ebenso ist die Mantelsonde zum umgebenden Erdreich 11 hin druckdicht ausgeführt. In der Erdwärmesonde 100 gemäß dem zweiten Ausführungsbeispiel ist der Zwischenraum 19 zwischen der Kernsonde 5 und der Mantelsonde 300 daher ein gas- und druckdicht abgeschlossener Raum (auch die Kernsonde 5 ist druckdicht ausgebildet). Dem Zwischenraum 19 wird über die Zufuhrleitung 308 mittels eines Kompressors oder einer Pumpe das Wasser/Äthanolgemisch unter Druck zugeführt. Der Betriebsdruck des Wasser/Äthanolgemisches beträgt im vorliegenden Ausführungsbeispiel 2,5 bar. Über wenigstens eine der Saugleitungen 304, 306 wird das Wasser/Äthanolgemisch aus dem Zwischenraum 19 wieder abgeführt. Auf diese Weise entsteht ein Fluidkreislauf, der als Kühlkreislauf Verwendung finden kann.

Der Kreislauf umfasst weiterhin einen Wärmetauscher 312, von dem aus eine Vorlaufleitung 314 zur Zufuhrleitung 303 führt. In der Vorlaufleitung ist ein Kompressor oder eine Pumpe 310 angeordnet, der bzw. die zum Aufbau des nötigen Drucks im Wasser/Äthanolgemisch dient. Mittels eines ebenfalls in der Vorlaufleitung 314 angeordneten Absperrventils 318 kann der Vorlauf abgesperrt werden. Ein Rücklaufleitungssystem 316, 324, 326 verbindet die Absaugleitungen 304, 306 mit dem Wärmetauscher 312. Das Rücklaufleitungssystem umfasst eine Anzahl von Zweigleitungen 324, 326, wobei die Anzahl der Zweigleitungen der Anzahl der Saugleitungen 304, 306 entspricht. Die Zweigleitungen 324, 326 münden in eine Rücklaufleitung 316, die schließlich zum Wärmetauscher 312 führt. In jeder Zweigleitung 324, 326 ist ein Absperrventil 320, 322 angeordnet. Mit Hilfe der Absperrventile können die Zweigleitungen 324, 326 individuell abgesperrt werden.

Im Betrieb des Kühlkreislaufes wird das Wasser/Äthanolgemisch mit einem Betriebsdruck von 2,5 bar in den Zwischenraum 19 zwischen der Kernsonde 5 und der Mantelsonde 300 eingebracht. Aufgrund der Arbeit der Kernsonde 5 wird dem Wasser/Äthanolgemisch im Bereich des Verdampfungsraumes Wärme entzogen. Im Unterschied zum ersten Ausführungsbeispiel wird die dem Wasser/Äthanolgemisch entzogene Wärme jedoch nicht vollständig durch Wärmezufuhr aus dem Erdreich 11 ausgeglichen. Die Ursache hierfür liegt darin, dass das Wasser/Äthanolgemisch nicht kontinuierlich im Zwischenraum verbleibt sondern wieder abgepumpt wird. Insbesondere bei einem Abpumpen im Bereich des Verdampfungsraumes kann die dem Wasser/Äthanolgemisch vom verdampften Kältefluid entzogene Wärme vor dem Abpumpen vom umgebenden Erdreich 11 nicht wieder vollständig ersetzt werden, so dass das abgepumpte Wasser/Äthanolgemisch abkühlt. Das abgekühlte und über die Saugleitung 306 abgesaugte Wasser/Äthanolgemisch wird über die Zweigleitungen 326 und die Rücklaufleitung 316 dem Wärmetauscher 312 zugeführt. Im Wärmetauscher 312 kann es dann wieder Wärme aufnehmen, beispielsweise Abwärme aus dem Wärmekreislauf der Kernsonde 5 (Wärmekreislauf nicht dargestellt). Das erwärmet Wasser/Äthanolgemisch wird dann über die Vorlaufleitung 314 und die Zufuhrleitung 308 wieder in den Zwischenraum 19 eingespeist. Der Kältekreislauf kann außer zum Aufnehmen von Abwärme beispielsweise zum Kühlen eines Hauses Verwendung finden. Da dem zirkulierenden Wasser/Äthanolgemisch über den Wärmetauscher 312 Abwärme des mit der Kernsonde 5 verbundenen Wärmekreislaufes zugeführt werden kann, welches dem Kältefluid im Bereich des Verdampfungsraumes wieder zugeführt wird, kann außerdem der Wirkungsgrad des Wärmekreislaufes erhöht werden.

Außerdem ermöglicht die Mantelsonde gemäß dem zweiten Ausführungsbeispiel eine Schonung des die Erdwärmesonde 100 umgebenden Erdreichs. Bei herkömmlichen Erdwärmesonden führt der Entzug von Wärme aus dem Erdreich dazu, dass sich um die Erdwärmesonde herum ein Frostmantel ausbildet. Ein derartiger Frostmantel kann zu Rissen im Erdreich führen, insbesondere wenn es Fels- oder Lehmschichten umfasst. Die Risse können die Undurchlässigkeit dieser Schichten für Grundwasser beeinträchtigen, sodass beispielsweise trinkwasserführende Schichten verunreinigt werden könnten. Der Betrieb von Erdwärmesonden ist daher nicht ohne Weiteres überall möglich. Mit der Erdwärmesonde gemäß dem zweiten Ausführungsbeispiel kann das Entstehen eines Frostmantels durch die Nutzung der Abwärme verhindert werden. Dazu wird, wie oben bereits beschrieben, dem aus dem Zwischenraum 19 abgesaugten kühlen Wasser/Äthanolgemisch die Abwärme beispielsweise eines Aggregates über den Wärmetauscher 312 zugeführt. Anschließend wird das Wasser/Äthanolgemisch mit einer deutlich höheren Temperatur wieder in den Zwischenraum 19 zwischen der Kernsonde 5 und der Mantelsonde 300 eingebracht. Dadurch kann sichergestellt werden, dass das Wasser/Äthanolgemisch im Zwischenraum 19 - und somit auch das umgebende Erdreich - keine Minustemperaturen erreichen kann. Extreme Temperaturwechsel im umgebenden Erdreich 11 können dadurch vermieden werden, ebenso das Auftreten von abwechselnden Frost-/und Tauperioden.

Das Vorhandensein mehrerer Absaugleitungen, die sich bis in unterschiedliche Tiefen erstrecken, ermöglicht es, in unterschiedlichen Tiefen um die Erdwärmesonde 100 herum frostfreie und durchfrostete Zonen 11 im Erdreich auszubilden. In Erdschichten, in denen die Ausbildung eines Frostmantels unbedenklich ist, kann so ein Frostmantel entstehen, wohingegen in anderen Bereichen, sprich anderen Tiefen, wo die Ausbildung eines Frostmantels bedenklich wäre, die Durchfrostung des Erdreiches verhindert werden kann. Wenn in Fig. 2 beispielsweise ein Frostmantel im Bereich des Einsaugendes 330 der Saugleitung 306 akzeptabel ist, nicht aber im Bereich des Ansaugendes 328 der Saugleitung 304 so kann beispielsweise der mit der Saugleitung 306 verbundene Zweig 325 des Rücklaufleitungssystems mittels des Absperrventils 322 abgesperrt werden. Das Absaugen des Wasser/Äthanolgemisches erfolgt dann alleine im Bereich der Einsaugöffnung 328. Aufgrund des längeren Verbleibs des Wasser/Äthanolgemisches im Bereich der Einsaugöffnung 330 im Vergleich zum Bereich der Einsaugöffnung 328 kann das Wasser/Äthanolgemisch im Bereich der Einsaugöffnung 330 auf tiefere Temperaturen auskühlen als im Bereich der Einsaugöffnung 328. Im Bereich der Einsaugöffnung 330 kann sich daher ein Frostmantel im Erdreich ausbilden, wohingegen die 328 unterdrückt ist.

Wenn hingegen das Absperrventil 320 geschlossen und das Absperrventil 322 geöffnet ist, würde dies den Frostmantel im Bereich der Einsaugöffnung 330 abschmelzen. Dadurch besteht die Möglichkeit, bei erhöhtem Kühlbedarf diejenige Saugleitung 306 zuzuschalten, deren Einsaugöffnung 330 sich im Bereich des Frostmantels befindet. Auf diese Weise kann kurzfristig die Kühlleistung des Kühlkreislaufs erhöht werden.

Auch in der Erdwärmesonde 100 gemäß dem zweiten Ausführungsbeispiel kann ein Leck in der Kernsonde 5 detektiert werden. Im Unterschied zum ersten Ausführungsbeispiel führt ein Leck jedoch nicht zu Austritt von Ammoniak in das Wasser/Äthanolgemisch 21, da der Betriebsdruck des Wasser/Äthanolgemisches (im vorliegenden Ausführungsbeispiel 2,5 bar) höher ist als der Systemdruck in der Kernsonde 5 (bei einer Verdampfungstemperatur von -20°C herrscht in der Sonde ein Systemdruck des Ammoniaks von 1,55 bar). Bei einem Leck dringt also das die Kernsonde 5 umgebende Wasser/Äthanolgemisch in die Kernsonde 5 ein. Da ein Austritt von Ammoniak aus der Kernsonde 5 bei einem Leck nicht stattfindet, kann mit der Erdwärmesonde 100 gemäß dem zweiten Ausführungsbeispiel eine Kontamination des Erdreiches 11 besonders zuverlässig ausgeschlossen werden.

Die Detektion eines Leckes in der Kernsonde 5 kann über die Detektion von Ammoniak im Wärmekreislauf der Kernsonde 5 erfolgen. Im Falle der Detektion eines Leckes stoppen Sensoren und Sperrventile automatisch den normalen Betriebsvorgang der Erdwärmesonde 100. Die Kernsonde 5 und die Mantelsonde 300 können dann unmittelbar nach Eintreten der Störung evakuiert und die kontaminierten Fluide entsorgt werden. Nach Behebung der Schadensursache wird in einem Initialisierungsschritt die Dichtigkeit beider Sondenkörper geprüft. Bei negativer Schadensmeldung startet ein Betriebsprogramm die Erdwärmesonde 100 neu.

Nachfolgend wird das Einbringen einer Erdwärmesonde 1, 100, wie sie in den Ausführungsbeispielen beschrieben worden ist, erläutert. Bei einer aus Rohrsegmenten, aufgebauten Mantelsonde 3, 300 werden die einzelnen Segmente nacheinander in das Bohrloch eingeführt. Noch bevor ein Segment vollständig in das Bohrloch eingeführt ist, wird das nächste Segment gasdicht und gegebenenfalls druckdicht angeschweißt. So werden nacheinander alle Segmente miteinander verschweißt und in das Bohrloch eingeführt, bis die Sohle des Bohrloches erreicht ist. Nach einer Dichtigkeitsprüfung und Fixierung der Mantelsonde 3, 300 im Bohrloch wird die Kernsonde 5 zentrisch in die Mantelsonde 3, 300 eingebaut und der Zwischenraum 19 zwischen der Kernsonde 5 und der Mantelsonde 3, 300 mit dem Wasser/Äthanolgemisch befüllt.

## Patentansprüche

1. Von der Erdoberfläche aus in ein Bohrloch zu versenkende Erdwärmesonde (1, 100) mit einem im Bereich der Erdoberfläche anzuordnenden oberen Ende und einem in das Bohrloch zu versenkenden unteren Ende
- mit einer Kernsonde (5), welche umfasst:
- einen Verdampfungsraum (23) welcher bei in ein Bohrloch versenkter Erdwärmesonde (1, 100) im Bereich unterhalb der Vegetationszone vorhanden ist,
- wenigstens eine Fluidleitung (25), welche vom oberen Ende aus zugänglich ist, sich bis zum Verdampfungsraum (23) erstreckt und über wenigstens eine Austrittsöffnung (31) in den Verdampfungsraum (23) mündet, und
- wenigstens einen Steigraum (27), welcher vom Verdampfungsraum (23) ausgehend zum oberen Ende führt und einem über die wenigstens eine Fluidleitung (25) in den Verdampfungsraum (23) eingebrachten und dort verdampften Fluid den Aufstieg zum oberen Ende ermöglicht,
- und mit einer Mantelsonde (3, 300), welche die Kernsonde (5) in ihrem in das Bohrloch zu versenkenden Abschnitt vollständig umgibt.

2. Erdwärmesonde (1,100) nach Anspruch 1, in der Mantelsonde (3, 300) eine hohlzylindrische Form mit einer Zylinderwand (7) und einer Stirnwand (9) aufweist und die Abmessungen des Hohlzylinders so gewählt sind, dass sich die Kernsonde (5) in die Mantelsonde (3, 300) einbringen lässt, ohne die Zylinderwand (7) oder die Stirnwand (9) zu berühren.

3. Erdwärmesonde (1, 100) nach Anspruch 1 oder 2, in der zwischen der Zylinderwand (7) und der Kernsonde (5) ein fluidgefüllter Zwischenraum (19) vorhanden ist.

4. Erdwärmesonde (100) nach Anspruch 3, in der eine Vorrichtung (310) zum Erzeugen und Aufrechterhalten eines Fluidkreislaufes für das Fluid durch den Zwischenraum (19) vorhanden ist.

5. Erdwärmesonde (100) nach Anspruch 4, in der der Fluidkreislauf wenigstens eine sich von einem von der Erdoberfläche aus zugänglichen Abschnitt der Mantelsonde (300) aus in den Zwischenraum (19) erstreckende Saugleitung (304, 306) vorhanden ist.

6. Erdwärmesonde (100) nach Anspruch 5, in der zwei Saugleitungen (304, 306) vorhanden sind, die sich von einem von der Erdoberfläche aus zugänglichen Abschnitt der Mantelsonde (300) aus bis in unterschiedliche axiale Bereiche des Zwischenraums (19) erstrecken.

7. Erdwärmesonde (100) nach einem der Ansprüche 3 bis 6, in der der Druck des Fluides im Zwischenraum (19) höher ist, als der Druck des Kältefluids in der Kernsonde (5) beträgt.

8. Erdwärmesonde (1, 100) nach einem der Ansprüche 3 bis 7, in der das Fluid ein Wasser/Äthanolgemisch ist.
